(19) Europäisches Patentamt
European Patent Office
Office européen des brevets

(11)  EP 1 755 039 B1

(12)  **EUROPEAN PATENT SPECIFICATION**

(45) Date of publication and mention
of the grant of the patent:
**05.11.2008  Bulletin 2008/45**

(51) Int Cl.:
***G06F 9/445*** *(2006.01)*

(21) Application number: **05388067.0**

(22) Date of filing: **18.08.2005**

(54) **Feedback linker for increased delta performance**

Rückgekoppelter Linker for erhöhte Delta-Performanz

Generateur de liens avec feedback pour produire de meilleurs deltas

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**21.02.2007  Bulletin 2007/08**

(73) Proprietor: **TELEFONAKTIEBOLAGET LM
ERICSSON (publ)
164 83 Stockholm (SE)**

(72) Inventors:
• **Eker, Johan
223 55 Lund (SE)**

• **Von Platen, Carl
216 19 Malmö (SE)**

(74) Representative: **Schwarze, Holm et al
Zacco Denmark A/S
Hans Bekkevolds Allé 7
2900 Hellerup (DK)**

(56) References cited:
**EP-A- 1 501 196          WO-A-98/56149
US-A1- 2003 212 715     US-A1- 2004 062 130**

**Description**

This invention relates to the updating of program code stored in a storage medium, which storage medium comprises a plurality of memory sectors. More particularly, the invention relates to the generation of an updated memory image to be loaded into a storage medium, e.g. a memory of a processing device, having stored thereon a current memory image corresponding to a current version of a computer program.

Many modern electronic devices, e.g. embedded devices, are controlled by software stored in flash memory. Flash memory is a type of memory that is frequently used in electronic devices, because it allows multiple rewrites. However, the write operations are limited to entire memory sectors, so-called pages, at a time. A typical page size of current flash memories is 64 kbyte.

When the software stored in a flash memory of an electronic device is updated, e.g. in order to add new features to the software and/or to correct errors in the current version of the software, some or all of the memory sectors of the flash memory are re-written/re-programmed or "re-flashed". In general, it is desirable to minimize the number of flash pages that are re-written during a software update, in order to minimize the time and energy consumption required for installing the software update.

In particular, an application where update times are of great concern is the over-the-air (OTA) update of mobile terminals. In such applications, it is known to distribute only modifications to the current image to the mobile terminal rather than the entire updated image. The modifications are generally referred to as delta-files. Typically, in such systems, an update agent running on the mobile terminal applies the received modifications to the current image which is thereby transformed to the updated version. Hence, it is generally desirable to reduce the size of the delta-files, in order to reduce the amount of data that has to be transmitted via the communications channel used for the OTA update.

EP 1 501 196 discloses a system for distributing computer files, e.g. for updating large software applications, in self-contained packages such as self-executable archives. This prior art system receives a list of files that need updating from the target computer. The system further receives source files and generates a base file and a number of delta files from which the required files can be created by applying the delta files to the base file. Subsequently, a self-contained package is created, e.g. as a CAB file. The system selects via a graph-based optimisation process a suitable base/input file from which one or more of the target files can be generated via a delta mechanism such that the total size of the delta files is minimized.

Furthermore, it is generally desirable to reduce the amount of storage capacity and computational resources required in the mobile terminal in order to perform the software update.

It is further a general problem of such update systems that the terminal may not be functional during the update process. Hence, it is desirable to reduce the time required for reflashing the memory and, thus, the downtime of the system.

However, due to the constraints of the flash memory mentioned above, even small updates of the source code of the software may cause a large portion of the flash pages to be updated, since changing even a single byte requires an entire page to be completely rewritten.

Published US application 2003/0142556 discloses a method of flash memory programming, wherein volatile information or volatile software components are stored near the end of the respective flash memory address space of the flash memory device to keep the need of changing or adjusting flash sectors as slight as possible.

However, the above prior art method requires information about the anticipated likelihood of changing the respective information components.

Consequently, it is an object of the present invention to facilitate improved delta update procedures.

The above and other problems are solved by a method as defined in claim 1 of generating an updated memory image as part of an optimized linking procedure, the updated memory image including updated program code to be loaded into a storage medium, which storage medium comprises a plurality of memory sectors and which storage medium has stored thereon a current memory image including a current program code version occupying a set of said memory sectors. The method comprises:

-    receiving an updated input code comprising a number of segments, wherein each segment is relocatable within the updated memory image;
-    arranging/laying out the segments within the updated memory image; wherein the arranging/laying out further comprises
-    receiving a representation of the current program code version;
-    performing at least one optimisation step adapted to decrease an objective function under at least one predetermined layout constraint, the objective function being indicative of a magnitude of differences between the current program code version and the updated program code version, the layout constraint being indicative of at least one constraint imposed on the arrangement/layout of segments within the memory image.

In particular, the invention is based on the recognition that a subsequent efficient delta file generation is greatly facilitated when the memory image is generated such that differences between the current and the updated memory image are small and localised, i.e. not spread out across the entire memory image.

The optimised linking procedure described herein creates an updated binary image with minimal differences. This is achieved by passing feedback information between different builds.

It is a further advantage that a high performance delta file generation is possible even with simple delta file generation tools, thereby avoiding the need for sophisticated and costly delta-file generation tools.

Applying an optimisation process that optimises, e.g. minimizes or maximises, a suitable objective function under suitable layout constraints during the linking stage improves the optimisation results, since at that point during the code generation process the effect of the linker has not yet been fixed. In particular, symbolic references between segments have not yet been resolved, thereby allowing a reduction in the number of differences as well as insuring that the differences are localised to few memory sectors.

Accordingly, in some embodiments, at least a first one of said segments includes at least one cross reference to at least a second one of said segments; and the method further comprises resolving said first cross reference between the arranged/laid out first and second segments. Consequently, the cross references are resolved after the arrangement of the segments according to the optimisation process, thereby allowing the optimisation process to take consequential changes due to such cross references into account.

When updating embedded software, which is stored in flash memory, the locality of the required modifications is a significant performance parameter. If the modifications are scattered over unnecessarily many flash sectors, this will lead to excessive down-time when upgrading the software, because the re-programming of the flash memory may well be a dominant contribution to the downtime of the device during an upgrade. However, it is very hard to optimize locality by post processing as is done in state-of-the art delta generators.

Rather than relying on the possibility of detecting interdependencies between different segments by essentially reverse engineering the linker process, the method described herein ensures that the generated image is generated with as few changes as possible in the first place, thereby facilitating a more efficient generation of the delta file that yields smaller delta files and requires fewer memory sections to be re-written. Hence, while prior art linkers have been completely ignorant to any requirement with respect to delta generation and have laid out the object code according to a different set of optimisation criteria, e.g. as to avoid long jumps, the method described herein causes the linker to be aware of the delta generation, rather than attempting to reorganize the layout in the final memory image.

By performing the optimisation step as an improvement, e.g. a decrease, of an objective function under at least one layout constraint, an efficient optimisation of the memory layout of the updated memory image is achieved.

As disclosed herein, the optimisation step comprises

- determining a set of common segments that are common for the current program code version and the updated program code version;
- determining a first subset of said determined set of common segments to be positioned at a same location within the updated memory image as in the current memory image; and a second subset of segments to be positioned at a different location in the updated memory image than in the current memory image; wherein said first and second subsets are determined by determining an at least approximate solution of an optimisation problem specified by an objective function and at least one layout constraint.

It has turned out that the above optimisation procedure leads to optimisation problems that are at least approximately solvable by known optimisation techniques within reasonable time and with reasonably small resource requirements, in particular computational resource requirements.

Typically, a code generation system comprises a compiler which compiles a source code and generates a number of object code modules, and a linker which generates the executable code in the form of a loadable memory image. The compiler and linker may for example be implemented as separate executable software programs, as functional modules of an integrated software development software application, or the like.

The source code typically comprises a series of statements written in some human-readable computer programming language. In modern programming languages, the source code which constitutes a software program is usually generated in the form of one or more text files, the so-called source code modules. The compiler is typically a computer program or a functional component of a computer program that translates the source code written in a particular programming language into computer-readable machine code. Typically, when the source code comprises a plurality of source code modules, the compiler compiles each source code module individually and generates corresponding object code modules, i.e. one object code module corresponding to each source code module.

The term object code is intended to include a computer-readable program code, typically expressed in binary machine language, which is normally an output of a given translation process, usually referred to as compilation, where the output is in principle ready to be executed by a computer. However, the object code typically comprises symbolic references that refer to other locations in the object code, e.g. to functions, variables, etc. that are defined elsewhere in the object code. In particular, when the object code comprises a plurality of object code modules, references to functions or variables included in other object code modules are stored as symbolic references. Hence, an object code module is typically relocatable in memory space and contains unresolved references. In particular, a relocatable object code module typically includes symbolic references and relocation information, the latter of which instructs the linker as to how to resolve the references. One interesting property of a relocatable object code module is that neither the start address nor the addresses of referenced symbols are determined yet. Accordingly, relocation is the process of replacing references to symbols with actual addresses.

Generally, for the purpose of the present description, the term segment is intended to refer to relocatable entities of the object code. The segments may correspond to entire object code modules/files as generated by a compiler, or they may correspond to smaller entities, e.g. parts of the object code modules generated by the compiler. Hence, in some embodiments, the segments are the smallest relocatable entities of the object code, in particular entities that can be relocated independently other segments. Generally, segments may correspond to structural entities of the programming language, such as functions, procedures, class definitions, constant definitions, variable definitions, etc. Hence, the term program code is intended to include segments of different types, e.g. segments including constants or similar data and executable code.

The linker is typically a computer program or a functional component of a computer program that resolves dependencies between the set of object code modules/segments that constitute a software development project, in particular any symbolic references. Furthermore, the tasks of the linker generally include laying out segments of the object code modules in memory, i.e. assigning addresses to the different segments. Hence, the task of the linker is to concatenate pieces of object code, called segments, and resolve references between the segments. The order in which the segments are laid out affects the size and the locality of the difference between the images.

The object code modules are typically represented as respective object files in a low-level file format that is hardware and/or platform specific. The updated object code modules are typically fed into a linker component for linking the updated object code modules resulting in the updated memory image suitable for subsequent processing by a delta file generator. Accordingly, in some embodiments, the input code comprises a number of object code modules, and the transforming comprises linking the number of object code modules.

In particular, in a delta file updating scheme, the memory image is subsequently fed into a delta file generator, i.e. a software program or functional component of a software program that generates a delta file representative of differences between the current program code version and the updated program code version. Accordingly, in some embodiments, the method further comprises generating a delta file representative of differences between the current program code version and the updated program code version. Hence, the resulting delta file includes the differences between the current and updated versions, i.e. the information required for the device to generate the updated version from the current version stored in the device and the delta file. It is an advantage of this embodiment, that the size of the file that needs to be uploaded to the device is reduced, thereby further reducing the time required to perform a software update.

In the context of such a delta-update scheme, the optimisation of an objective function indicative of a magnitude of differences between the current program code version and the updated program code version under certain layout constraint results in a decrease of the number of memory sectors occupied by the updated program code version that are different from the corresponding memory sectors of the set of memory sectors occupied by the current program code version. Therefore, the number of required re-writes is reduced. Furthermore, in many situations, the optimisation also decreases the size of the delta file, thereby reducing the required loading/transmission bandwidth and/or time as well as storage requirements in the target device.

As the current program code version stored in the memory is generally known to the process that generates a software update, the above optimisation is based on information that is readily available to the updating process. In particular, the process is based on information about the currently installed version and the current update.

For example, the representation of the current program code version may comprise the current memory image of the set of memory sectors and/or current layout information about the current program code version. The layout information may include information about a current layout of object code modules and/or object module parts within the current object memory image, a map file description of the current memory image of the set of memory sectors, and/or the like.

In some embodiments, the method further comprises storing an updated representation about the updated program code in a database, a memory image repository, a code repository, or the like, thereby making relevant information about the updated program code version available for subsequent linking steps of subsequent versions of the program code.

Here the term layout of the code in memory comprises the respective start or base addresses of the different object code modules and/or segments, i.e. their respective relative addresses within the address space occupied by the program code.

In one embodiment, at least one layout constraint includes a first constraint indicative of a requirement that any two of said common segments are to be arranged such that they are non-overlapping in memory space.

In yet another preferred embodiment, the optimisation process is controlled by at least one optimisation parameter. In some embodiments the optimisation parameter determines which one of a number of selectable objective functions and/or layout constraints to use in the optimisation. Alternatively or additionally, the optimisation parameter may control one or more limitations for the optimisation process. For example, one or more of the optimisation parameters may determine a maximum allowed increase in size caused by the optimisation process such as a maximum size of padding space allowed to be added by the optimisation process. Alternatively or additionally, at least one optimisation parameter may include a parameter determining a maximum allowed number of relays and/or long jumps introduced by the optimisation process.

As will be described herein, by defining different cost measures, a family of related optimization problems is obtained. Common to the optimization problems is that they include respective sets of constraints, which describe the manner in which segments can be laid out in memory. During the linking process, an objective function, which corresponds to the choice of cost measure, is optimized under the corresponding layout constraints.

According to one embodiment, the objective function is indicative of a number of segments that are located at a different location in the updated memory image than in the current memory image. Consequently, this objective function is based on a cost measure that reduces the number of the determined common segments where the updated segment is located at a different position in the updated memory image compared to the current memory image, thereby providing an optimisation problem that can be mapped into a class of well/known mathematical problems, for which a variety of methods exist that are known to yield an at least close to optimal solution.

According to another embodiment, the objective function is indicative of a number of memory words that have a different value in the updated memory image than in the current memory image, thereby providing an objective function that is particularly suitable for a large variety of memory types, as this objective function is not related to a specific division of the memory into larger sectors. Here, the term memory word is intended to refer to a number of bits treated as a single unit by the processing unit. For example, in an eight-bit machine, the word length is eight bits; in a 16-bit machine, the word length is 16 bits. Hence the term memory word corresponds to the smallest unit of memory that is addressable by the processing unit. Typically, computer systems store the information in words, each word comprising a predetermined number of bits, e.g. 16bits, 32bits, 64bits, etc. It has turned out that this objective function tends to significantly reduce the size of the resulting delta file.

In one embodiment, the objective function includes a first cost contribution indicative of the number of words that, for a given memory layout of the updated memory image, are equal in each of the segments of the updated program code version compared to the current program code version, and a second cost contribution indicative of the number of references from one segment to another segment that are equal in the current program version and the updated program code version. Consequently, the objective function takes changes introduced due to changes in the cross-references into account that may arise from a relocation of a segment.

In yet another embodiment, the objective function is indicative of a minimum number of memory sectors that require reprogramming when the current memory image is replaced by the updated memory image. Hence, this objective function directly minimises the cost measure that influences the time required for a reprogramming of a flash memory. In particular, in some embodiments, the objective function and/or the layout constraint accounts for segments that span more than one memory sector and for memory sectors that include parts of more than one segments. Accordingly, in one embodiment, the layout constraint includes a condition that relates memory sectors with corresponding segments. In one embodiment, the layout constraint includes a condition for each pair of a memory sector and a segment where at least a part of the segment of said pair is stored in the memory sector of said pair.

In a further embodiment, the objective function includes a first cost contribution indicative of the number of memory sectors that, for a given memory layout of the updated memory image, require reprogramming; and a second cost contribution indicative of a size of the segments that are positioned in memory sectors different from the set of memory sectors. Consequently, the objective function accounts for both re-programmed memory sectors and additional/new memory sectors that are included in the updated memory image due to a relocation of segments. Consequently, an improved optimisation of the code layout is provided.

It is an advantage of the invention that the trade-off between the benefits - in terms of the required number of re-writes - and the costs - in terms of memory size, execution time, etc. - of the optimisation process may efficiently be controlled.

In embodiments of the invention, the optimisation problem is formulated as a quadratic or linear program, e.g. an integer program or a binary integer program. When the objective function and the at least one layout constraint are represented as a binary integer program (BIP), particularly efficient algorithms for solving the optimisation problem at least approximately are available, since a number of commercially available so-called BIP-solvers exist. Furthermore, the strict mathematical formulation, which is provided by a BIP, is also useful when considering alternative, approximate or exact, solution methods.

Further preferred embodiments are disclosed in the dependant claims.

It is noted that the features of the method described above and in the following may be implemented in software and carried out on a data processing system or other processing means caused by the execution of program code means such as computer-executable instructions. Here, and in the following, the term processing means comprises any circuit and/or device suitably adapted to perform the above functions. In particular, the term processing means comprises general- or special-purpose programmable microprocessors, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

For example, the program code means may be loaded in a memory, such as a Random Access Memory (RAM), from a storage medium or from another computer/computing device via a computer network. Alternatively, the described features may be implemented by hardwired circuitry instead of software or in combination with software.

The present invention can be implemented in different ways including the method described above and in the following, a data processing system, and further product means, each yielding one or more of the benefits and advantages described in connection with the first-mentioned method, and each having one or more preferred embodiments corresponding to the preferred embodiments described in connection with the first-mentioned method.

In particular, the invention relates to a data processing system for updating program code stored in a memory, the memory comprising a plurality of memory sectors, the data processing system being suitably programmed to perform the steps of the method described above and in the following.

The invention further relates to a computer program product comprising program code means adapted to cause a data processing system to perform the method described above and in the following, when said program code means are executed on the data processing system. The computer program product may be embodied as a computer-readable medium having stored thereon said program code means.

For the purpose of the present description, the term electronic device comprises any device comprising a memory such as a flash memory for storing program code. Examples of such devices include portable radio communications equipment and other handheld or portable devices. The term portable radio communications equipment includes all equipment such as mobile telephones, pagers, communicators, i.e. electronic organisers, smart phones, personal digital assistants (PDAs), handheld computers, or the like.

The above and other aspects of the invention will be apparent and elucidated from the embodiments described in the following with reference to the drawing in which:

fig. 1 schematically shows a block diagram of an embodiment of a system for updating software in a mobile terminal;

fig. 2 schematically shows a block diagram of an electronic device such as a mobile terminal;

fig. 3 shows a block diagram of an embodiment of a software update process;

fig. 4 shows a block diagram of another embodiment of a software update process;

Fig. 5 schematically illustrates the memory layout of a flash memory before and after a software update.

Fig. 6 schematically illustrates a block diagram of a linker process.

Fig. 7 illustrates the relation between segments and memory sectors in an example of a memory image.

Fig. 8 illustrates another example of a software update process.

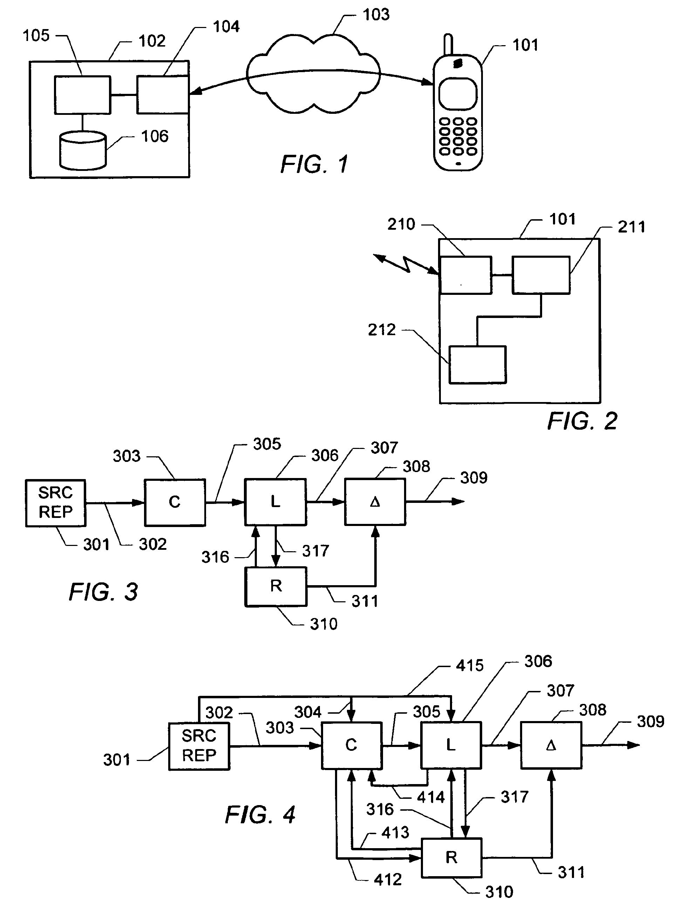

Fig. 1 schematically shows a block diagram of an embodiment of a system for updating software in an electronic device such as a mobile terminal. The system comprises a mobile terminal 101, e.g. a mobile telephone or the like, a software updating system 102, and a communications interface 103.

The software updating system 102 may comprise a server computer having access to the communications network. In some embodiments, the functionality of the server computer may be distributed among a plurality of computers, e.g. computers connected via a computer network, e.g. a local area network, a wide area network, an Internet, or the like. The software updating system 102 comprises an interface circuit 104 allowing the software updating system to communicate data via the communications interface 103. For example, the interface circuit may comprise a serial port, a parallel port, a short range wireless communications interface, e.g. an infrared port, a Bluetooth transceiver, or the like. Further examples of interface circuits include a network card, a DSL modem, a gateway computer, or the like.

The software updating system further comprises a processing unit 105, e.g. the CPU of a server computer, suitably programmed to control and to perform the update process. The processing unit 105 may further perform the actual code generation process described herein. However, typically the code generation will be performed by another computer, and the generated code will then be transferred to the processing unit 105.. The processing unit further comprises a version database/repository 106 having stored therein memory images of and further information about at least a base/current version and an updated version of the software to be updated. In some embodiments, the version database may further comprise additional information, e.g. a plurality of base versions and/or updated versions, e.g. for different models of mobile terminals, for different groups of customers, and/or the like.

The communications interface 103 may be any suitable wired or wireless communications interface for communicating data between the software updating system 102 and the mobile terminal 101. For example, in the case of a mobile telephone adapted to communicate via a cellular communications network, e.g. a GSM network, a UMTS network, a GPRS network, or the like, the communication between the software updating system and the mobile terminal in connection with a software update may be performed via that cellular communications network, thereby avoiding the need for additional communications interfaces in the mobile terminal.

Hence, in order to update software on the mobile terminal 101, the mobile terminal may receive updating instructions from the updating system, e.g. including the images of the memory sectors to be rewritten.

In a differential updating system using delta files, the updating instructions are generated such that they enable the mobile terminal to generate the updated software version from the existing version already stored in the mobile terminal and from additional information included in the updating instructions. The delta file may be applied in-place, i.e. the changes are made by the mobile terminal on the existing image, thereby requiring little additional storage. Furthermore, since only the delta file needs to be loaded and since the delta file typically is considerably smaller than the new version, the loading time is reduced by the above method. Hence, in the above, a possible scenario is described in which the code generation process described herein may be applied. However, it will be appreciated that the code generation process described herein may be applied to other update scenarios. For example, the update may be provided to the target device via other media, e.g. other communications channels, via a computer-readable medium, etc.

Embodiments of the code generation process will be described in greater detail below.

Fig. 2 schematically shows a block diagram of an example of an electronic device such as a mobile terminal. The mobile terminal 101 comprises a communications block 210, a processing unit 211, and a memory unit 212.

The communications block 210 comprises circuitry and/or devices allowing radio-based communication of data via a cellular communications network. Hence, for the purpose of the present description, the communications block 210 comprises receiver circuitry and transmitter circuitry for receiving and transmitting data signals. The communications block may further comprise circuitry for suitably processing the signals, e.g. modulating, coding, amplifying, etc., the signals by suitable techniques well known in the art of radio communications.

The mobile terminal further comprises a processing unit 211, e.g. a suitably programmed microprocessor. The processing unit is adapted to determine the version of the software stored in the mobile terminal, to calculate checksums of the stored software, and to generate an updated version of the software upon receipt of corresponding update instructions.

The memory unit 212 has stored thereon the software and/or other data in a predetermined version. For example, the memory 212 may comprise the firmware of the mobile terminal that implements the basic functions of the mobile terminal when loaded into and executed by the processing unit 211. The firmware may further comprise an operating system allowing application software to be executed. Accordingly, the memory 212 may further have stored thereon application software providing additional functionality. The memory 212 is addressed using a suitable address space, thereby allowing the processing unit to access selected parts of the memory. In some embodiments, the memory 212 may be logically or physically divided in a plurality of memory sectors. For example, the memory 212 may comprise flash memory allowing data to be written in sectors of a predetermined size.

For the purpose of the present description, it is assumed that the memory 212 is divided in a number of sectors of a predetermined size denoted P1, P2, P3, ..., PN. However, it is understood that any other addressing of the memory may be used, instead. It is further understood that the updating process described herein may be applied to the entire memory 212, e.g. if the entire image of the flash memory of a mobile phone is to be updated, or to only predetermined parts of the memory, e.g. if one or more software applications are to be updated.

In the following, different examples of a software update process will be described with reference to figs. 3-7. In the drawings like reference numbers refer to like or corresponding components, features, entities, etc.

Fig. 3 shows a block diagram of an embodiment of a software update process. Initially, a compiler 303 receives one or more source code modules 302 from a source code repository 301, e.g. a database of source codes, a version management system, or directly from a source code editing tool. The compiler 303 generates a number of object code modules 305 that are fed into a linker 306. The linker 306 combines the object code modules 305 into an absolute file 307 ready for execution. One of the tasks performed by the linker module 306 is the resolution of cross-references among separately compiled object code modules and the assigning of final addresses to create a single executable program 307. Hence, the output 307 from the linker is a file that can directly be loaded into e.g. the flash memory of a device that is to execute the program. The linker output 307 will also be referred to as a memory image.

The linker output 307 is fed into a delta file generation module 308, also referred to as a delta file generator.

The delta file generator 308 receives the binary (updated) image 307 and a corresponding current memory image as inputs and generates a delta file 309 that is sent as an update package, or as a part of an update package, to the device whose memory is to be updated from the current memory image to the updated memory image. The current memory image may, for example, be stored in a repository, e.g. a suitable database, for image files. In some embodiments the memory image is retrieved from a repository 310 that may be part of the same database system as the source repository 301. In some embodiments, the delta generator 308 may receive additional inputs, e.g. from the repository 310, such as extra link information, e.g. in the form of a so-called map file.

The generation of the delta file may schematically be illustrated by the following operations $file_{new}$ - $file_{base}$→ Δfile. Correspondingly, the actual generation of the new version may then be performed by the mobile terminal according to the following operation $file_{base}$ + Δfile → $file_{new}$.

It is understood that the above operations of generating the delta file (denoted as "-" in the above notation) and generating the new version on the mobile terminal (denoted as "+" operation in the above notation) may comprise more or less complex operations. Examples of suitable delta file techniques include the methods described in US 6,546,552 and in "Compressing Differences of Executable Code" by Brenda Baker, Udi Manber, and Robert Muth, in ACM SIGPLAN Workshop on Compiler Support for System Software (WCSSS'99), 1999.

Furthermore, the linker 306 receives information 316 stored in the repository 310 about the previous memory image/build. Accordingly, the linker 306 stores such information about the current linking process of the updated software in the repository for future use, as indicated by data flow arrow 317. The information stored and retrieved in the repository may include the generated image file itself, layout information about the layout of object code modules in the image file, source-to-machine-code mappings, etc. The term "source-to-machine-code mapping" refers to the relationship between source-code constructs and the corresponding object-code entities. A function (a constant, a class definition, etc.) may correspond to one or several segments. Depending on the implementation, a single object-code entity may also correspond to several functions (constants, class definitions, etc.). The complexity of this mapping depends on the actual implementation. Very simple mappings, e.g. where one source file maps to a single segment, may not even have to be stored explicitly, while complex mappings, e.g. where two functions in combination result in a shared segment, may have to be stored in order to properly match segments of the installed and updated images.

Fig. 4 shows a block diagram of another embodiment of a software update process, similar to the process described in connection with fig. 3. The process of fig. 4 differs from the process of fig. 3 in that not only the linker 306 but also the compiler 303 is integrated in the delta file generation process. Accordingly, the compiler receives information that enables the compiler to optimise the generation of the object code modules as to minimise differences in the object code between the current and the updated versions. In particular, the compiler 303 of fig. 4 receives information 413 about a previous compilation, in particular about the compilation that resulted in the currently installed memory image. Accordingly, according to this embodiment, the compiler 303 stores information 412 about each compilation in the repository 310, thereby making the information available for subsequent compilations. The compilation information 412 and 413 may include information about source-to-machine code mappings, object code layout, compiler optimisation information, and/or the like. Consequently, the compiler may apply the same optimisation steps to the same parts of the source code, thereby reducing the differences in the generated object code.

The compiler 303 further receives source file change information 304 from the source repository 301. In some embodiments the change information 304 includes information about which source code components, e.g. which functions, methods, classes, and or the like, have been modified during the current update, i.e. the update from the source code corresponding to the currently installed software to the updated source code that is to be compiled by the compiler 303. This information allows the compiler to generate the updated object code modules 305 with as few differences as possible.

In particular, if the compiler receives both the information about the previous compilation and change logs about changes in the source code, the compiler can ensure that those parts of the source code that have not been changed are compiled in the same way, e.g. with the same optimisation settings, as in the previous compilation, thereby resulting in minimal changes in the object code.

In some embodiments, the result of the previous compilation may even be stored, e.g. in the repository 310, thereby allowing a direct re-use of previously compiled components.

The compiler 303 of the embodiment of fig. 4 further receives feedback information 414 from the linker 306, e.g. requests/constraints on the size of the different object code modules. Consequently, the feedback signal causes the compiler to compile one or more of the source files resulting in object code modules/files that are more suitable for the generation of the optimised memory layout by the linker 306. For example, if the linker determines that the space available for a modified object code module has increased (e.g. because the object code module that in the current build is positioned subsequent in memory space with respect to the modified object code module is no longer present in the updated build), the linker may send a feedback signal 414 to the compiler as to inform the compiler that the upper size constraint for the modified object code module is increased. This in turn may allow the compiler to avoid the splitting of the modified object code module. In some embodiments, the process of fig. 4 may be implemented as a two-pass process where the linker generates the feedback signal based on the result of the linking of a first pass, i.e. a first compilation and linking. The feedback signal 414 causes the compiler to re-compile one or more of the source files resulting in modified object files that are more suitable for the generation of the optimised memory layout by the linker. In some embodiments, the feedback signal 414 may even include information about which object module parts, e.g. which functions, functions to include in each of the object code modules.

The linker 306 of the embodiment of fig. 4 further receives change information 415 directly from the source repository, e.g. information about previous linker options, or the like.

It is understood that the different types of information received by the compiler and linker in the above embodiments may be combined in different ways, i.e. in some embodiments, the compiler and/or linker may receive some or all of the information described in connection with figs. 3 and 4.

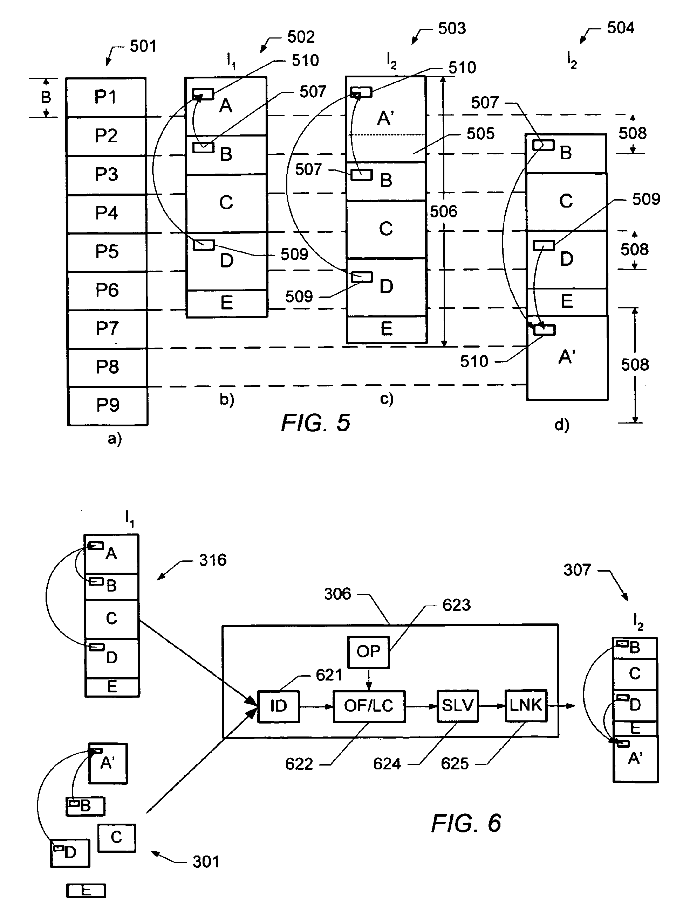

Fig. 5 schematically illustrates the memory layout of a flash memory before and after a software update.

Fig. 5a illustrates the structure of a part of the address space of a flash memory. The address space 501 is divided into a number of memory sectors denoted P1, P2, P3, P4, P5, P6, P7, P8, and P9. The memory sectors have a predetermined size $B$; in a typical conventional flash memory the memory sector size is 64 kbyte; however other sizes are possible as well.

Fig. 5b illustrates an example of the memory layout of a program code version corresponding to a currently installed memory image $I_1$, generally referred to by reference numeral 502, stored in the address space 501. The program code version $I_1$ in this example comprises five segments designated A, B, C, D, and E. It is understood that the above numbers merely serve as examples and that program code versions may include any number of segments and a memory may include any number of memory sectors. The segments have different sizes and are sequentially arranged in the address space 501. In the example of fig. 5, it is assumed that segments B and D include cross-references 507 and 509, respectively, to an address 510 in segment A, e.g. because segments B and D include function calls to a function defined in segment A.

Fig. 5c illustrates an updated version corresponding to an updated memory image $I_2$, generally designated 503. In this example, it is assumed that the only change between version $I_1$ and version $I_2$ is the replacement of segment A by segment A', where the segment A' is assumed to be larger than the previous segment A as illustrated by the additional memory space 505 required for A'. The remaining segments B, C, D, and E are assumed to be unchanged, i.e. identical to the corresponding portion of version $I_1$. However, as is illustrated by reference numeral 506 in fig. 5c, when sequentially arranging the updated version $I_2$, the entire content of memory sectors P1 through P7 need to be rewritten. Memory sectors P1, P2, and P3 need to be rewritten, because the content of segment A has changed to A', and the remaining memory sectors need to be rewritten because the location of the segments B, C, D, and E is changed between versions $I_1$ and $I_2$.

Fig. 5d illustrates an alternative memory layout of the updated program version $I_2$, generally designated 504. In this example, the linker has located the modified segment A' at the end of the memory image, thereby avoiding the need to change the start addresses of the segments B-E. However, the values of the cross references 507 and 509 in segments B and D change due to the relocation of segment A'. Hence, when updating the memory with the alternative updated version $I_2$ to replace the previous version $I_1$, i.e. by reflashing the relevant memory sectors of a flash memory, only memory sectors P2, P5, and P7-P9 need to be re-written, as illustrated by reference numeral 508, i.e. fewer memory sectors than in the example of fig. 5c.

It is understood that, in some situations, the compiler may be configured to generate object modules according to size constraints. For example in the example of fig. 5, the compiler may generate a size-constraint object code module $A'_1$ that has the same size as the original module A, and an "overflow" module $A'_2$ that includes the object code that could not be fit into the module $A'_1$, thereby further improving the subsequent delta generation.

Furthermore, if the compiler, based on change information about the source code between versions $I_1$ and $I_2$ and/or information about the compilation of version $I_1$ generates the object code module $A'_1$ to be as similar to the original object code module A of version $I_1$, the differences in the resulting images may further be reduced. For example, if, as is the case in the example of fig. 5, the object code module A spans more than one memory sector (P1 and P2 in fig. 5), the compiler may be able to limit the changes to the object code module $A'_1$ to be restricted to only parts of the object code module such that not all of the memory sectors P1 and P2 are affected by the update of A to $A'_1$. Furthermore, a reduction of differences between A and $A'_1$ further reduces the risk that references in other object code modules that refer to $A'_1$ need to be changed, which would result in changes in other object code modules as well.

Furthermore, it is understood that the memory space previously occupied by the moved segment A' may be utilised by other segments, e.g. smaller segments that need to be relocated or by new segments that have not been present in the previous version $I_1$. If the space remains unutilised, it forms padding in the updated image. In order to avoid reprogramming for the sole purpose of achieving padding, the content of the installed image may be kept as is, i.e. not be overwritten.

It is further noted that, in some embodiments e.g. the segments A-E may correspond to object code modules / object files. In other embodiments, the segments may correspond to smaller entities, i.e. parts of object code modules, also called object module parts.

Hence, the above example illustrates that a proper arrangement of the segments in the updated version $I_2$ causes the differences of the updated memory image $I_2$ to be small and local.

As illustrated in fig. 6, the method described herein provides a linker process that utilises information fed back to it from previous builds/memory images to optimise the layout of the segments in the memory.

Fig. 6 schematically illustrates a block diagram of a linker process. The linker 306 receives the segments 301 and the previous memory image 316 as described above. For the purpose of this description the segments 301 are assumed to be subdivided such that they can be located independently of each other. Furthermore, the start addresses of the segments (e.g. relative to a reference address) of the previous image 316 are assumed to be known.

Further, for the purpose of the present description it is assumed that the linker 306 has access to all the segments in the two images $I_1$ and $I_2$ so that the linker can compare the segments with each other. Each segment typically consist of a block of raw binary content and a table of relocation information. The relocation information identifies the symbolic references, which are made in the segment, and describes how they are resolved once the linker has established the actual values of the symbols.

Two examples of types of references are frequently used in practice: Absolute references and relative references. For example, in some software architectures, absolute references may be used when the address of a function is taken (e.g. virtual tables in C++). Relative references may, for example, be used in a function call.

The details about how references are resolved typically differ between absolute and relative references. Nevertheless, the method described herein is not limited to these two kinds of references. For the purpose of the present description it is merely assumed that the resolution of references depends on the location of no more than two segments: the one that contains the referred symbol and (optionally) the one, from which the reference is made.

In an initial step 621, the linker 306 identifies corresponding segments in the previous image $I_1$ and in the updated image $I_2$. For example, this may be done by symbolic names. Generally, the identification of segments relates to the mappings between source code and object code described above. For example, if all object files contain a single segment, the object file name may directly be used as identification. In another example each object file contains a fixed set of segments (e.g. one for code and constants, one for initialised data, and one for data with initial value zero). If each function, constant, variable, etc. is placed in its own segment, the symbol that denotes the base address of the segment may be used for identification. In examples where the mapping is more complex, information provided by the compiler, e.g. as described in connection with the example of fig. 4, may facilitate the identification of segments.

In subsequent step 622, the linker 306 identifies a set of layout constraints that specify the degrees of freedom that the linker has for laying out the segments. The linker further defines an objective function to be minimised/maximised in a subsequent optimisation step.

In the example of fig. 6, the linker is configured to be able to perform the optimisation based on different cost measures. Accordingly, the step 622 is controlled by an optimisation parameter 623 that controls which cost measure and corresponding layout constraints to use as a basis for the objective function. For example, the cost measure may be user-selectable, e.g. by starting the linker process with a corresponding input parameter, a command line option, or the like. Embodiments of cost functions and corresponding layout constraints will be described in more detail below.

In the subsequent step 624, the linker determines the layout of the segment by determining an at least approximate solution of a cost optimization problem with the determined objective function under the corresponding layout constraints. For example, the step 624 may implement any suitable algorithm known as such in the art for optimising an objective function under given constraints.

Based on the determined layout that corresponds to the solution of the optimisation problem determined in step 624, in step 625 the linker lays out the segments in the determined order and resolves the cross references between the segments in a manner known as such in the art and resulting in the updated memory image $I_2$, designated 307.

In the following, the following three objective functions will be described in greater detail:

　　1. The number of segments that have to be moved to new locations.
　　2. The number of differences in a word-by-word comparison of the two images.
　　3. The number of flash sectors that have to be reprogrammed in order to update the image.

For the purpose of the present description, let $N$ be the number of segments which appear in both the installed image, $I_1$, and the updated image, $I_2$, whose layout has not yet been determined. Let $start(k)$ be the start address of segment $k$ in $I_1$ and $size(k)$ be the size of segment $k$ in $I_2$, $k = 1, 2, ...,N$. Without lack of generality, it may be assumed that $start(1) < start(2) < ... < start(N)$ (otherwise the segments may simply be renumbered such that this condition is fulfilled).

We are looking for solutions $x \in \{0, 1\}^N$, where $x_k = 1$ when segment $k$ retains its start address, $start(k)$, also in $I_2$. Other segments ($x_k=0$) are simply assumed to be placed "elsewhere", which could mean that they are appended to the end of the image, or placed in any unused memory slots, e.g. caused by segments that were present in $I_1$ but are

no longer present in $I_2$.

A first layout constraint may be formulated by considering the condition that two segments should not overlap in the new image $I_2$. In particular, let $j$ and $k$ be distinct segments such that $j < k$. If segment $j$ has grown such that *start (j) + size(j) > start(k),* then both of the segments cannot retain their start address at the same time. At least one of them has to be moved to another location.

This constraint can be expressed as

$$x_j + x_k \leq 1, \text{ for all } j,k; \ j<k, \ start(j) + size(j) > start(k) . \qquad (1)$$

Objective function 1: Minimal number of moved segments:

The constraint according to eqn. (1) specifies a condition that all feasible solutions to the optimisation problem need to fulfil. Nevertheless, we are interested in a solution that is not only feasible, but that also minimizes (or at least reduces) the difference between the images $I_1$ and $I_2$. The first example of an objective function is based on the desire to minimize the number of segments that are moved in $I_2$ relative to $I_1$. The rationale behind this cost measure is that by minimizing the number of moved segments, unnecessary differences due to memory layout are avoided. In particular, this scheme avoids the case of a single segment that has grown (or been inserted) and thus offsets a long sequence of unmodified segments as illustrated in fig. 5.

The number of moved segments is minimal for solutions, $x$, that maximize the following objective function under the constraints of eqn .(1):

$$OF_1(x) = \sum_{k \in \{1,...,N\}} x_j \qquad (2)$$

Hence, the optimisation problem to be solved according to this embodiment is the maximization of $OF_1(x)$ of eqn. (2) under the layout constraints according to eqn. (1). It is interesting to note that the above optimisation problem corresponds to the so-called Independent Set Problem (see Minty, G. J. "On Maximal Independent Sets of Vertices in Claw Free Graphs." J. Combin. Th. B 28, 284-304, 1980).

The Independent Set Problem is a well-known NP-hard problem, but there are good approximations that run in polynomial time (see e.g. Ravi Boppana, Magnús M. Halldórsson "Approximating Maximum Independent Sets by Excluding Subgraphs", in Proc. 2nd Scandinavian Workshop on Algorithm Theory (SWAT 90), pp. 13-25, 1990.) Consequently, these approximate solutions may also be applied to the solution of the optimization problems described herein. Furthermore, practical problem instances will typically have sparse graphs, since segments are unlikely to grow more than the size of a few successors in $I_1$. It has turned out that in many instances, the graphs corresponding to the above optimisation problem will be close to tree-shaped, which makes exact, polynomial-time solutions possible. Such solutions which may be applied to the optimization problems described herein are, for example, described in Mohammad Taghi Hajiaghayi "Algorithms for Graphs of (Locally) Bounded Treewidth" PhD Thesis, Univ. Waterloo, Ontario, September 2001.

Objective function 2: Minimal number of modified words:

As an alternative to the objective function of eqn. (2), we now consider minimization of words that differ between images $I_1$ and $I_2$. For this purpose we consider the difference between two instances of a given segment, i.e. the difference between a segment in $I_1$ and the corresponding segment in $I_2$. Let $S$ be a segment that appears in both images and let $S_1$ and $S_2$ be its two instances in $I_1$ and in $I_2$, respectively. Furthermore, the linker keeps any cross-references in S symbolic during the layout optimisation, i.e. the references in $S_2$ are not resolved into the actual memory addresses but they maintain a symbolic value.

Segment instances of equal lengths length are compared word by word. If the length of the segments differs, the comparison may be limited to the "common" part. For example, if the installed segment instance is longer than the updated one, the length of the updated instance is used and vice versa. The raw binary content can simply be compared word by word as to detect whether the words are equal or not.

The comparison of the symbolic references may be performed as follows:

A symbolic reference may be characterised by:

- The symbolic address - also referred to as the target - to which the reference is made.

- The address - also referred to as the source - from which the reference is made.

- A function *f(source, target)* that specifies the relocation formula that the linker uses in order to compute the instruction word at the source address.

In one embodiment, a conservative equality test is used and coincidental equality is disregarded. Two references are assumed to differ, if any of the above three components differ. Under the assumption that the same start address can be used, two compared references will always have the same source address. This is a direct effect of the word-by-word comparison scheme. Thus, it only remains to be checked that the symbolic target address and the relocation formulas are identical.

It is noted that symbolic references may coincidentally be equal to an instruction word that is not a reference. However, in the present embodiment, such coincidental equalities are disregarded.

Let $w_j$ be the number of words that are known to be equal in both instances of segment $j$, i.e. $w_j$ is a non-negative value that is found by comparing the raw binary content of segment $S_{1,j}$ and $S_{2,j}$ word by word. Similarly $c_{jk}$ denotes the number of potentially equal references in segment j, which refer to destinations in segment $k$, i.e. the number of words that may be equal depending on the location of the segments $j$ and $k$. The quantity $c_{jk}$ may be determined by comparing references at corresponding words in the two segment instances.

Consequently, by maximizing the following objective function, the number of words which have to be modified when upgrading $I_1$ to $I_2$ is minimized:

$$OF_2(x) = \sum_{j \in \{1,\ldots,N\}} w_j \, x_j \; + \; \sum_{j \in \{1,\ldots,N\}} \sum_{k \in \{1,\ldots,N\}} c_{jk} \, x_j \, x_k \qquad\qquad (3)$$

The first term in eqn. (3) counts the number of equal words, in the segments that have not been moved, while the second term counts the number of equal references from segments that have not been moved to segments that have not been moved.

Hence, according to this embodiment, the objective function $OF_2(x)$ is maximised under the layout constraint of eqn. (1).

It is noted that the second term in eqn. (3) is quadratic in $x$. If desired, it is possible to remove the quadratic term $x_j \, x_k$ by introducing suitable auxiliary variables and constraints, thereby arriving at a linear representation of the above objective function (see e.g. Laurence A. Wolsey, "Integer Programming", p 155, John Wiley & Sons, Inc, New York, 1998). However, most commercially available BIP solvers do not require quadratic terms to be removed, but some of them may remove quadratic terms themselves.

Objective function 3: Minimal number of modified flash sectors:

A third cost measure that counts the number of modified flash sectors will now be described. Unlike the two first cost measures, the location of each modified word is now considered as well, since a single modified word makes it necessary to reprogram the entire sector, in which it is contained.

Let $M$ be the number of flash sectors in $I_1$ and $z \in \{0, 1\}^M$, such that $z_f = 0$ when flash sector $f$ is modified in $I_2$ compared to $I_1$. The number of reprogrammed flash sectors is thus $M$ minus the sum of $z_f$ plus possible additional flash sectors that are new in $I_2$ and have not been used in $I_1$. Furthermore, let $B$ be the size of a flash sector.

Now, a third objective function is defined according to

$$OF_3(x,z) = \sum_{k \in \{1,\ldots,N\}} x_k \, size(k) + B \sum_{f \in \{1,\ldots,M\}} z_f, \qquad\qquad (4)$$

When $OF_3(x,z)$ is maximized, a minimal number of flash sectors require modification when upgrading from $I_1$ to $I_2$.

In the above cost function, the second term $\sum_{f \in \{1,\ldots,M\}} z_f$ counts the memory sectors that do not require re-programming for a given choice of x, i.e. $B \sum_{f \in \{1,\ldots,M\}} z_f$ measures the total size of the memory sectors that do not require re-programming. The first term $\Sigma_{k \in \{1,...,N\}} x_k$ *size(k)* corresponds to the accumulated size of all segments that retain their start address, i.e. do not have to be written elsewhere. The inclusion of this term ensures that the optimisation process does not result in a solution where simply all segments are moved to new locations.

For the purpose of the above cost function it is assumed that

$$\lceil K/B + \Sigma_k\ (1\text{-}x_k)\ size(k)/B \rceil \qquad\qquad (5)$$

additional flash sectors are required. Here, *K* is the accumulated size of new segments and the sum $\Sigma_k$ *(1-x_k) size(k)/B* represents segments that are moved. The notation $\lceil...\rceil$ refers to the ceiling function that rounds to the next highest integer. The formula is exact under the assumption that new segments and moved segments are appended at the end of the image, starting from a new flash sector.

Under this assumption, moved segments and removed segments (which appear in $I_1$ but not in $I_2$) create gaps, i.e. empty memory slots, in the new image. It is desirable to use this space, as to achieve a more efficient memory usage. Furthermore, fewer additional flash sectors are required if the gaps in already modified sectors, (i.e. sectors where $z_f = 0$), are used by suitably small, new or moved segments. A placement of such new and/or modified segments in empty memory slots may be based on a solution of a corresponding optimisation problem; however, filling the gaps optimally is a hard optimization problem in itself. It is understood that, in embodiments where the memory gaps are utilised, eqn. (5) only provides an upper bound of the number of additional sectors.

In the following, a set of layout constraints is described that relates the memory sectors that require re-programing ($z_f = 0$) with the layout of the segments, i.e. with the vector *x*, and constraints that relate the segments and memory sectors with cross references.

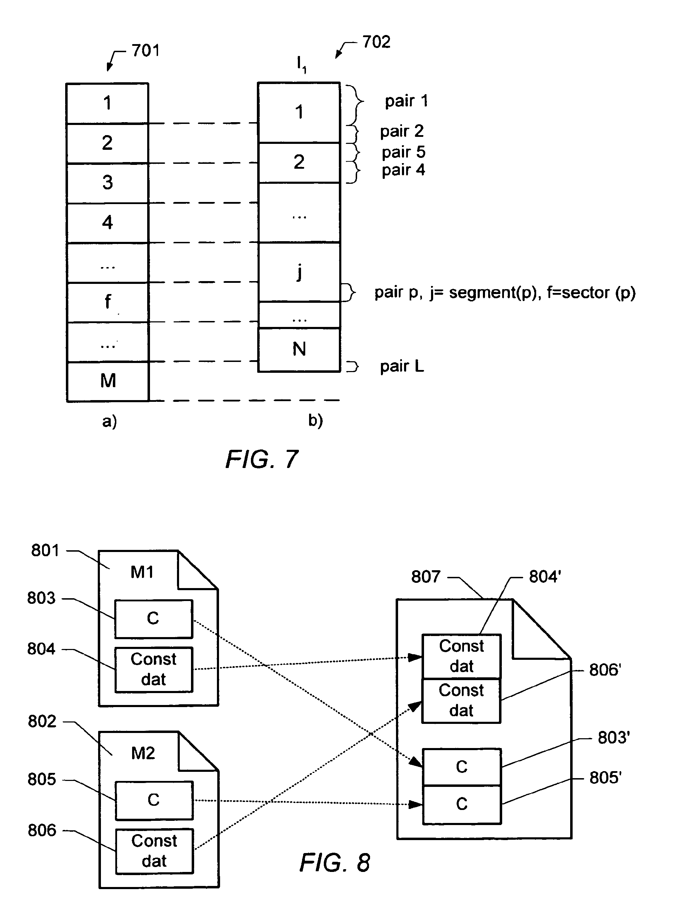

A flash sector may contain several segments and a single segment may span several sectors as is illustrated in fig. 7.

Fig. 7 illustrates the relation between segments and memory sectors in an example of a memory image. Fig. 7a illustrates the structure of a part of the address space of a flash memory. The address space 701 is divided into a number of memory sectors enumerated 1, 2, 3, 4, ..., f, ...M.

Fig. 7b illustrates an example of the memory layout of a program code version corresponding to a currently installed memory image $I_1$, generally referred to by reference numeral 702, stored in the address space 701. The program code version in this example comprises N segments enumerated 1,2..., j, ...N. The segments have different sizes and are sequentially arranged in the address space 701. For the purpose of this description, the pairs (sector, segment) in the installed image $I_1$ are considered, i.e. the sector/segment-pairs where at least a part of the segment is located in the memory sector of that pair. The pairs are identified by the numbers 1,2,3,4,...,p,...*L*, and *sector(p)* and *segment(p)* denote the first and second components of the *p*-th pair, respectively. For example, in the example of figure 7, the *p*-th pair includes segment *j* and sector *f*, i.e. *j=segment(p)*, and *f = sector(p)*. Similarly, in the example of fig. 7, *1=segment(1), 1=sector(1), 1=segment(2), 2=sector(2),..., N=segment(L),* and *M=sector(L)*.

Furthermore, the variable $u \in \{0, 1\}^L$ is introduced such that $u_p = 1$ signifies that the part of the installed instance of *segment(p)* which occupies *sector(p)* is equal to the corresponding part of the updated instance of the same segment. Here, the term "corresponding part" refers to the part that would occupy the same memory sector, if the updated segment was given the same start address as the installed one.

Furthermore, let $R_p$ be the set of segments referred to by a cross-reference in the *p*-th (sector, segment) pair. Since $u_p = 1$ implies that all such referred segments have the same start addresses in $I_2$ as in $I_1$ (because otherwise the resolved value of the cross reference would have changed in *segment(p))*, we have:

$$u_p \le x_j, \text{ for all } j \in R_p \qquad\qquad (6)$$

If the segment instances differ in raw binary content, $u_p = 0$ is asserted.

Given a (sector, segment) pair that is identified by the integer *p*, its segment *j* and its flash sector *f*, at least one of the following holds:

- The instances are identical in $I_1$ and $I_2$, that is $u_p = 1$.
- The segment has been moved to somewhere else, that is $x_j = 0$.
- The flash sector is reprogrammed, that is $z_f = 0$.

This is captured by the following layout constraint:

$$u_p + (1 - x_j) + (1 - z_f) \geq 1, \text{ or, equivalently, } x_j + z_f \leq 1 + u_p. \tag{7}$$

There are $L$ such constraints, one for each (section, sector) pair. In summary, the optimisation problem according to this embodiment is formulated as finding a maximum of

$$OF_3(x,z) = \sum_{k \in \{1,...,N\}} x_k \, size(k) + B\sum_{f \in \{1,...,M\}} z_f,$$

where

$$x \in \{0, 1\}^N, \, z \in \{0, 1\}^M, \, u \in \{0, 1\}^L,$$

under the layout constraints:

$$x_j + x_k \leq 1, \qquad \qquad \text{for all } j,k: j < k, \, start(j) + size(j) > start(k),$$

$$u_p \leq x_j, \qquad \qquad \text{for all } j \in R_p,$$

$$x_j + z_f \leq 1 + u_p \,, \qquad \qquad \text{for } p=1,2, \, ...,L, \, j = section(p), \, f = sector(p).$$

In summary, in the above, three alternative objective functions have been described together with corresponding layout constraints. The above optimisation problems are formulated as binary integer programs (BIP), and they may be solved by known methods for solving BIPs, so called BIP solvers. Examples of commercially available software applications for solving BIPs include the CPLEX package by ILOG Inc., and the IBM Optimization Subroutine Library (OSL) by IBM Corporation. Based on a solution $x_{min}$ of an optimisation problem based on one of the above objective functions and layout constraints, the linker lays out the segments such that the segments $j$ for which $x_{min,j} = 1$ are placed at the same start address as in the previous image, while the segments $k$ for which $x_{min,k} = 0$ are placed elsewhere, e.g. in empty memory slots or at the end of the memory image.

Fig. 8 illustrates another example of a software update process. In particular, fig. 8 illustrates a mechanism by which program code that belongs to different section types is assembled by the linker in the resulting memory image. In the example of fig. 8, two object code modules M1 and M2, generally designated 801 and 802, respectively, are linked, resulting in a memory image 807. Each object code module includes a code segment, designated 803 and 805, respectively, and a constant data segment, designated 804 and 806, respectively. Some linkers will place the constant data segments in the beginning of the resulting memory image, followed by the code segments, as illustrated by the memory image 807 that includes the constant data segmentss 804' and 806' followed by the code segments 803' and 805'. If, during a subsequent code update, the compiler adds a third object code module M3 (not explicitly shown) that also includes a constant data segment, the above linking mechanism would cause this additional constant data segment to be placed before the code segments, thereby causing all code segments to be moved.

Hence, this example illustrates how even minor changes in the source code may propagate throughout the resulting memory image resulting in a multitude of secondary effects. It is an advantage of the method described herein, that such changes are avoided, since the segments are laid out by the linker such that differences between the current and the updated memory image are small and localised, i.e. not spread out across the entire memory image.

Hence, in the above a method has been described that facilitates the generation of delta-files for software updates, in which the differences between subsequent versions are small and local. The size of the delta-file relates to bandwidth and storage requirements. The locality of the differences relates to the time required to reprogram the flash memory. The method described herein does not replace delta generation as such; The delta generation may still be performed a post-processing pass to the process described herein. However, the method described herein produces memory images in which unnecessary differences are avoided. As a result, high quality delta-file generation does no longer require advanced delta tools, but may be achieved even with simpler delta generators.

It is noted that the above embodiments have mainly been described with reference to flash memory. However, it is understood that the method described herein may also be implemented in connection with other types of memory, including memory types that are writable in smaller units, e.g. bytewise or even bitwise. Consequently, the term memory sector as used herein may refer to a smallest writable/programmable unit of the memory; in some embodiments this may be larger than the smallest addressable/readable unit of memory. However, for other types of memory the smallest writable unit of memory may be the same as the smallest readable unit of memory. Furthermore, the method described herein may also be applied in connection with other storage media, such as optical disks, hard disks, floppy disks, tapes, and/or other types of magnetic and/or optical storage media. For example, the method described herein may also be applied to the update of computers, such as desktop computers, which load programs from a secondary memory/storage medium into RAM before execution.

The invention can be implemented by means of hardware comprising several distinct elements, and by means of a suitably programmed computer. In the device claims enumerating several means, several of these means can be embodied by one and the same item of hardware, e.g. a suitably programmed microprocessor or computer, and/or one or more communications interfaces as described herein. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

**Claims**

1. A method of generating an updated memory image (307) as part of an optimized linking procedure, the updated memory image including updated program code to be loaded into a storage medium (212), which storage medium comprises a plurality of memory sectors (P1, P2, P3, P4, P5, P6, P7, P8, P9) and which storage medium has stored thereon a current memory image (502) including a current program code version occupying a set of said memory sectors; the method comprising

   - receiving (305) an updated input code comprising a number of segments, wherein each segment is an entity of object code relocatable within the updated memory image;
   - arranging/laying (306) out the segments within the updated memory image;

   **characterised in that** the arranging/laying out comprises

   - receiving a representation of the current program code version (316);
   - performing (624) at least one optimisation step adapted to decrease an objective function under at least one predetermined layout constraint, the objective function being indicative of a magnitude of differences between the current program code version and the updated program code version, the layout constraint being indicative of at least one constraint imposed on the arrangement/layout of segments within the memory image; wherein the optimisation step comprises: determining (621) a set of common segments that are common for the current program code version and the updated program code version; and determining (624) a layout of the segments by computing an at least approximate solution of an optimisation problem specified by the objective function and the at least one layout constraint, the determined layout being indicative of a first subset of said determined set of common segments to be positioned at a same location within the updated memory image as in the current memory image; and a second subset of segments to be positioned at a different location in the updated memory image than in the current memory image; wherein said first and second subsets are determined by determining the at least approximate solution of the optimisation problem;
   - arranging (625) the segments within the updated memory image according to the determined layout of the segments.

2. A method according to claim 1, wherein at least a first one of said segments includes at least one cross reference (507, 509) to at least a second one of said segments; and wherein the method further comprises resolving said first cross reference between the arranged/laid out first and second segments.

3. A method according to claim 1 or 2, wherein the at least one layout constraint includes a first constraint indicative of a requirement that any two of said common segments are to be arranged such that they are nonoverlapping in memory space.

4. A method according to any one of claims 1 through 3, wherein the objective function is indicative of a number of segments that are located at a different location in the updated memory image than in the current memory image.

5. A method according to any one of claims 1 through 3, wherein the objective function is indicative of a number of memory words that have a different value in the updated memory image than in the current memory image.

6. A method according to claim 5, wherein the objective function includes a first cost contribution indicative of the number of words that, for a given memory layout of the updated memory image, are equal in each of the segments of the updated program code version compared to the current program code version, and a second cost contribution indicative of the number of references from one segment to another segment that are equal in the current program version and the updated program code version.

7. A method according to any one of claims 1 through 3, wherein the objective function is indicative of a minimum number of memory sectors that require reprogramming when the current memory image is replaced by the updated memory image.

8. A method according to claim 7, wherein the layout constraint includes a condition that relates memory sectors with corresponding segments

9. A method according to claim 8, wherein the layout constraint includes a condition for each pair of a memory sector and a segment where at least a part of the segment of said pair is stored in the memory sector of said pair.

10. A method according to any one of claims 7 through 9, wherein the objective function includes a first cost contribution indicative of the number of memory sectors that, for a given memory layout of the updated memory image, require reprogramming; and a second cost contribution indicative of a size of the segments that, for a given memory layout of the updated memory image, are positioned in memory sectors different from the set of memory sectors.

11. A method according to any one of claims 1 through 10, wherein the objective function and the at least one layout constraint are represented as a binary integer program.

12. A method according to any one of claims 1 through 11, wherein the representation of the current program code version comprises at least one of the current memory image of the set of memory sectors and a map file description of the current memory image of the set of memory sectors.

13. A method according to any one of claims 1 through 12, wherein the input code comprises a number of object code modules; and wherein the transforming comprises linking the number of object code modules.

14. A method according to any one of claims 1 through 12, wherein the input code comprises a number of relocatable segments of one or more object code modules; and wherein the transforming comprises linking the relocatable segments of one or more object code modules.

15. A method according to any one of claims 1 through 14, wherein the storage medium is a memory of a processing device (101).

16. A data processing system (102) for generating an updated memory image (307) including updated program code for being loaded into a memory (212) of a processing device (101), which memory comprises a plurality of memory sectors and which memory has stored thereon a current memory image including a current program code version occupying a set of said memory sectors, the data processing system comprising program code means adapted to cause the data processing system to perform all the steps of the method according to any one of claims 1 through 15.

17. A computer program product comprising program code means adapted to cause a data processing system to perform all steps of the method according to any one of claims 1 through 15, when said program code means are executed on the data processing system.

18. A computer program product according to claim 17, wherein the computer program product comprises a linker.

19. Use of a method according to any one of claims 1 through 15 for the reprogramming of portable radio communications equipment.

EP 1 755 039 B1

**Patentansprüche**

1. Verfahren zum Erzeugen eines aktualisierten Speicherabbildes (307) als Teil einer optimierten Verlinkungs-Prozedur, wobei das aktualisierte Speicherabbild einen aktualisierten Programmcode enthält, der in ein Speichermedium (212) geladen wird, wobei das Speichermedium eine Vielzahl von Speichersektoren (P1, P2, P3, P4, P5, P6, P7, P8, P9) umfasst und wobei das Speichermedium darauf ein gegenwärtiges Speicherabbild (502) gespeichert hat mit einer gegenwärtigen Programmcode-Version, die einen Satz von Speichersektoren belegt; wobei das Verfahren umfasst:

   - Empfangen (305) eines aktualisierten Eingabecodes mit einer Anzahl von Segmenten, wobei jedes Segment eine Einheit eines Objektcodes ist, die innerhalb des aktualisierten Speicherabbildes verschiebbar ist;
   - Anordnen/Auslegen (306) der Segmente innerhalb des aktualisierten Speicherabbildes;

   **dadurch gekennzeichnet, dass** das Anordnen/Auslegen umfasst:

   - Empfangen einer Darstellung der gegenwärtigen Programmcode-Version (316);
   - Durchführen (624) zumindest eines Optimierungsschrittes, der ausgelegt ist, eine Zielfunktion unter zumindest einer vorbestimmten Layout-Bedingung zu verringern, wobei die Zielfunktion einen Betrag von Differenzen zwischen der gegenwärtigen Programmcode-Version und der aktualisierten Programmcode-Version anzeigt, wobei die Layout-Bedingung zumindest eine Bedingung anzeigt, die der Anordnung/Auslegung der Segmente in dem Speicherabbild auferlegt wird; wobei der Optimierungsschritt umfasst: Bestimmen (621) eines Satzes gemeinsamer Segmente, die für die gegenwärtige Programmcode-Version und die aktualisierte Programmcode-Version gemeinsam ist; und Bestimmen (624) eines Layouts der Segmente durch ein Berechnen einer zumindest angenäherten Lösung eines Optimierungsproblems, das durch die Zielfunktion und die zumindest eine Layout-Bedingung spezifiziert wird, wobei das bestimmte Layout einen ersten Untersatz des bestimmten Satzes gemeinsamer Segmente anzeigt, die an einer gleichen Position in dem aktualisierten Speicherabbild wie in dem gegenwärtigen Speicherabbild angeordnet werden; und einen zweiten Untersatz von Segmenten, die an einer unterschiedlichen Position in dem aktualisierten Speicherabbild als in dem gegenwärtigen Speicherabbild angeordnet werden; wobei der erste und zweite Untersatz durch ein Bestimmen der zumindest angenäherten Lösung des Optimisierungsproblems bestimmt sind;
   - Anordnen (625) der Segmente in dem aktualisierten Speicherabbild gemäß dem bestimmten Layout der Segmente.

2. Verfahren nach Anspruch 1, wobei zumindest ein erstes der Segmente zumindest einen Kreuzverweis (507, 509) zu zumindest einem zweiten der Segmente enthält; und wobei das Verfahren ferner ein Auflösen des ersten Kreuzverweises zwischen dem angeordneten/ausgelegten ersten und zweiten Segment umfasst.

3. Verfahren nach Anspruch 1 oder 2, wobei die zumindest eine Layout-Bedingung eine erste Bedingung enthält, die eine Anforderung anzeigt, dass jegliche zwei der gemeinsamen Segmente angeordnet werden sollen, so dass sie im Speicherraum nicht überlappen.

4. Verfahren nach irgendeinem der Ansprüche 1 bis 3, wobei die Zielfunktion eine Anzahl von Segmenten anzeigt, die in dem aktualisierten Speicherabbild an einer unterschiedlichen Position wie in dem gegenwärtigen Speicherabbild angeordnet sind.

5. Verfahren nach irgendeinem der Ansprüche 1 bis 3, wobei die Zielfunktion eine Anzahl von Speicherworten anzeigt, die in dem aktualisierten Speicherabbild einen unterschiedlichen Wert wie in dem gegenwärtigen Speicherabbild aufweisen.

6. Verfahren nach Anspruch 5, wobei die Zielfunktion einen ersten Kostenbeitrag enthält, der die Anzahl von Worten anzeigt, die für ein bestimmtes Speicher-Layout in jedem der Segmente der aktualisierten Programmcode-Version gleich sind, verglichen mit der gegenwärtigen Programmcode-Version, und einen zweiten Kostenbeitrag, der die Anzahl von Verweisen von einem Segment zu einem anderen Segment anzeigt, die in der gegenwärtigen Programmversion und der aktualisierten Programmcode-Version gleich sind.

7. Verfahren nach irgendeinem der Ansprüche 1 bis 3, wobei die Zielfunktion eine minimale Anzahl von Speichersektoren anzeigt, die eine Wiederprogrammierung erfordern, wenn das gegenwärtige Speicherabbild durch das aktualisierte Speicherabbild ersetzt wird.

17

8. Verfahren nach Anspruch 7, wobei die Layout-Bedingung eine Bedingung enthält, die Speichersektoren mit damit zusammenhängenden Segmenten in Beziehung setzt.

9. Verfahren nach Anspruch 8, wobei die Layout-Bedingung eine Bedingung für jedes Paar eines Speichersektors und eines Segmentes enthält, wobei zumindest ein Teil des Segments des Paares in dem Speichersektor des Paares gespeichert wird.

10. Verfahren nach irgendeinem der Ansprüche 7 bis 9, wobei die Zielfunktion einen ersten Kostenbeitrag enthält, der die Anzahl von Speichersektoren anzeigt, die für ein bestimmtes Speicher-Layout des aktualisierten Speicherabbildes eine Wiederprogrammierung erfordert; und einen zweiten Kostenbeitrag, der eine Größe der Segmente anzeigt, die für ein bestimmtes Speicher-Layout des aktualisierten Speicherabbildes in Speichersektoren angeordnet sind, die sich vom Satz der Speichersektoren unterscheiden.

11. Verfahren nach irgendeinem der Ansprüche 1 bis 10, wobei die Zielfunktion und die zumindest eine Layout-Bedingung als ein binäres Integerprogramm dargestellt werden.

12. Verfahren nach irgendeinem der Ansprüche 1 bis 11, wobei die Darstellung der gegenwärtigen Programmcode-Version zumindest eines von dem gegenwärtigen Speicherabbild, von dem Satz von Speichersektoren und einer Abbildungsdatei- bzw. Map-File-Beschreibung des gegenwärtigen Speicherabbildes des Satzes von Speichersektoren umfasst.

13. Verfahren nach irgendeinem der Ansprüche 1 bis 12, wobei der Eingabecode eine Anzahl Objektcode-Module umfasst; und wobei das Transformieren ein Verbinden der Objektcode-Module umfasst.

14. Verfahren nach irgendeinem der Ansprüche 1 bis 12, wobei der Eingabecode eine Anzahl von verschiebbaren Segmenten eines oder mehrerer Objektcode-Module umfasst; und wobei das Transformieren ein Verbinden der verschiebbaren Segmente eines oder mehrerer Objektcode-Module umfasst.

15. Verfahren nach irgendeinem der Ansprüche 1 bis 14, wobei das Speichermedium ein Speicher einer Verarbeitungsvorrichtung (101) ist.

16. Datenverarbeitungssystem (102) zum Erzeugen eines aktualisierten Speicherabbildes (307) einschließlich eines aktualisierten Programmcodes zum Laden in einen Speicher (212) einer Verarbeitungsvorrichtung (101), wobei der Speicher eine Vielzahl von Speichersektoren umfasst und wobei der Speicher darauf ein gegenwärtiges Speicherabbild mit einer gegenwärtigen Programmcode-Version gespeichert hat, die einen Satz von Speichersektoren belegt, wobei das Datenverarbeitungssystem eine Programmcode-Einrichtung umfasst, die ausgelegt ist, das Datenverarbeitungssystem zu veranlassen, alle Schritte des Verfahrens nach irgendeinem der Ansprüche 1 bis 15 durchzuführen.

17. Computerprogramm-Produkt mit einer Programmcode-Einrichtung, die ausgelegt ist, ein Datenverarbeitungssystem zu veranlassen, alle Schritte des Verfahrens nach irgendeinem der Ansprüche 1 bis 15 durchzuführen, wenn die Programmcode-Einrichtung auf dem Datenverarbeitungssystem ausgeführt wird.

18. Computerprogramm-Produkt nach Anspruch 17, wobei das Computerprogramm-Produkt eine Verlinkungseinheit umfasst.

19. Verwendung eines Verfahrens nach irgendeinem der Ansprüche 1 bis 15 für die Wiederprogrammierung einer tragbaren Funkkommunikationsausrüstung.

**Revendications**

1. Procédé de génération d'une image (307) de mémoire mise à jour en tant que partie d'une procédure optimisée d'établissement de liaison, l'image de mémoire mise à jour comprenant un code de programme mis à jour devant être chargé dans un support de stockage (212), lequel support de stockage comporte de multiples secteurs de mémoire (P1, P2, P3, P4, P5, P6, P7, P8, P9) et lequel support de stockage comporte, stocké sur lui, une image de mémoire courante (502) comprenant une version de code de programme courante occupant un ensemble desdits secteurs de mémoire ; le procédé comprenant :

- la réception (305) d'un code d'entrée mis à jour comportant un certain nombre de segments, dans lequel chaque segment est une entité d'un code objet pouvant être repositionné dans la mémoire d'image mise à jour ;
- l'agencement/la disposition (306) des segments dans la mémoire d'image mise à jour ;

**caractérisé en ce que** l'agencement/la disposition comprend

- la réception d'une représentation de la version de code de programme courante (316) ;
- l'exécution (624) d'au moins une étape d'optimisation conçue pour diminuer une fonction d'objectif sous au moins une contrainte de disposition prédéterminée, la fonction d'objectif étant indicative d'une amplitude de différences entre la version de code de programme courante et la version de code de programme mise à jour, la contrainte de disposition étant indicative d'au moins une contrainte imposée sur l'agencement/la disposition de segments dans l'image de mémoire ; dans lequel l'étape d'optimisation comprend : la détermination (621) d'un ensemble de segments communs qui sont communs à la version de code de programme courante et à la version de code de programme mise à jour ; et la détermination (624) d'une disposition des segments en calculant une solution au moins approchée d'un problème d'optimisation spécifié par la fonction d'objectif et la contrainte de disposition au nombre d'au moins une, la disposition déterminée étant indicative d'un premier sous-ensemble dudit ensemble déterminé de segments communs devant être positionnés en un même emplacement dans l'image de mémoire mise à jour comme dans l'image de mémoire courante ; et d'un second sous-ensemble de segments devant être positionnés dans un emplacement qui, dans l'image de mémoire mise à jour, est différent de celui occupé dans l'image de mémoire courante ; dans lequel lesdits premier et second sous-ensembles sont déterminés en déterminant la solution au moins approchée du problème d'optimisation ;
- l'agencement (625) des segments dans l'image de mémoire mise à jour conformément à la disposition déterminée des segments.

2. Procédé selon la revendication 1, dans lequel au moins un premier desdits segments comprend au moins un renvoi (507, 509) à au moins un second desdits segments, et dans lequel le procédé comprend en outre la résolution dudit premier renvoi entre des premier et second segments agencés/disposés.

3. Procédé selon la revendication 1 ou 2, dans lequel la, au moins une, contrainte de disposition comprend une première contrainte indicative d'une exigence selon laquelle deux quelconques desdits segments communs doivent être agencés de manière à ne pas se chevaucher dans un espace de mémoire.

4. Procédé selon l'une quelconque des revendications 1 à 3, dans lequel la fonction d'objectif est indicative d'un nombre de segments qui sont placés dans un emplacement de l'image de mémoire mise à jour différent de celui occupé dans l'image de mémoire courante.

5. Procédé selon l'une quelconque des revendications 1 à 3, dans lequel la fonction d'objectif est indicative d'un nombre de mots de mémoire qui ont dans l'image de mémoire mise à jour une valeur différente de celle qu'ils ont dans l'image de mémoire courante.

6. Procédé selon la revendication 5, dans lequel la fonction d'objectif comprend une première contribution de coût indicatif du nombre de mots qui, pour une disposition en mémoire donnée de l'image de mémoire mise à jour, sont égaux dans chacun des segments de la version de code de programme mise à jour comparée à la version de code de programme courante, et une seconde contribution de coût indicative du nombre de références d'un segment à un autre segment qui sont égales dans la version de programme courante et dans la version de code de programme mise à jour.

7. Procédé selon l'une quelconque des revendications 1 à 3, dans lequel la fonction d'objectif est indicative d'un nombre minimal de secteurs de mémoire qui nécessitent une reprogrammation lorsque l'image de mémoire courante est remplacée par l'image de mémoire mise à jour.

8. Procédé selon la revendication 7, dans lequel la contrainte de disposition comprend une condition qui met en relation des secteurs de mémoire avec des segments correspondants.

9. Procédé selon la revendication 8, dans lequel la contrainte de disposition comprend une condition pour chaque paire constituée d'un secteur de mémoire et d'un segment où au moins une partie du segment de ladite paire est stockée dans le secteur de mémoire de ladite paire.

**10.** Procédé selon l'une quelconque des revendications 7 à 9, dans lequel la fonction d'objectif comprend une première contribution de coût indicative du nombre de secteurs de mémoire qui, pour une disposition de mémoire donnée de l'image de mémoire mise à jour, nécessitent une reprogrammation ; et une seconde contribution de coût indicative d'une taille des segments qui, pour une disposition de mémoire donnée de l'image de mémoire mise à jour, sont positionnés dans des secteurs de mémoire différents de l'ensemble de secteurs de mémoire.

**11.** Procédé selon l'une quelconque des revendications 1 à 10, dans lequel la fonction d'objectif et la, au moins une, contrainte de disposition sont représentées sous la forme d'un programme entier binaire.

**12.** Procédé selon l'une quelconque des revendications 1 à 11, dans lequel la représentation de la version de code de programme courante comprend au moins l'une de l'image de mémoire courante de l'ensemble de secteurs de mémoire et d'une description de fichier d'application de l'image de mémoire courante de l'ensemble de secteurs de mémoire.

**13.** Procédé selon l'une quelconque des revendications 1 à 12, dans lequel le code d'entrée comprend un certain nombre de modules de codes d'objets ; et dans lequel la transformation comprend l'établissement d'une liaison entre le nombre de modules de codes d'objets.

**14.** Procédé selon l'une quelconque des revendications 1 à 12, dans lequel le code d'entrée comprend un certain nombre de segments repositionnables d'un ou plusieurs modules de codes d'objets ; et dans lequel la transformation comprend l'établissement d'une liaison entre les segments repositionnables d'un ou plusieurs modules de codes d'objets.

**15.** Procédé selon l'une quelconque des revendications 1 à 14, dans lequel le support de stockage est une mémoire d'un dispositif de traitement (101).

**16.** Système (102) de traitement de données destiné à générer une image de mémoire mise à jour (307) comprenant un code de programme mis à jour destiné à être chargé dans une mémoire (212) d'un dispositif de traitement (101), laquelle mémoire comporte de multiples secteurs de mémoire et laquelle mémoire comporte, stockée sur elle, une image de mémoire courante comprenant une version de code de programme courante occupant un ensemble desdits secteurs de mémoire, le système de traitement de données comportant des moyens à code de programme conçus pour amener le système de traitement de données à exécuter toutes les étapes du procédé selon l'une quelconque des revendications 1 à 15.

**17.** Produit à programme d'ordinateur comportant des moyens à code de programme conçus pour amener un système de traitement de données à exécuter toutes les étapes du procédé selon l'une quelconque des revendications 1 à 15, lorsque lesdits moyens à code de programme sont exécutés sur le système de traitement de données.

**18.** Produit à programme d'ordinateur selon la revendication 17, lequel produit à programme d'ordinateur comprend un dispositif d'établissement de liaison.

**19.** Utilisation d'un procédé selon l'une quelconque des revendications 1 à 15 pour la reprogrammation d'un équipement portable de communications radio.

*FIG. 1*

*FIG. 2*

*FIG. 3*

*FIG. 4*

FIG. 5

FIG. 6

*FIG. 7*

*FIG. 8*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1501196 A
- US 20030142556 A
- US 6546552 B

**Non-patent literature cited in the description**

- **MINTY, G. J.** On Maximal Independent Sets of Vertices in Claw Free Graphs. *J. Combin. Th. B,* 1980, vol. 28, 284-304
- **RAVI BOPPANA ; MAGNÚS M. HALLDÓRSSON.** Approximating Maximum Independent Sets by Excluding Subgraphs. *Proc. 2nd Scandinavian Workshop on Algorithm Theory (SWAT 90,* 1990, 13-25
- **LAURENCE A. WOLSEY.** Integer Programming. John Wiley & Sons, Inc, 1998, 155